# EUROPEAN PATENT APPLICATION

(11) **EP 2 281 727 A1**
(43) Date of publication of application: **09.02.2011**
(21) Application number: 09758286.0
(22) Date of filing: 01.06.2009
(51) Int. Cl.: B60W 10/10, B60K 6/36, B60K 6/387, B60K 6/48, B60K 6/547, B60L 11/14, B60W 10/02, B60W 10/06, B60W 10/08, B60W 20/00, F16H 61/04, F16H 63/40, F16H 59/42, F16H 59/46

(54) **POWER TRANSMISSION DEVICE FOR HYBRID VEHICLE AND SPEED CHANGE OPERATION METHOD THEREOF**

(30) Priority: 03.06.2008 JP 2008145852
(71) Applicant: AISIN AI Co., Ltd., Nishio-shi Aichi-ken 445-0006 (JP)
(72) Inventor: SASAKI, Kan, Nishio-shi Aichi 445-0006 (JP)
(74) Representative: Winter, Brandl, Fürniss, Hübner, Röss, Kaiser, Polte - Partnerschaft
(86) International application number: PCT/JP2009/059990
(87) International publication number: WO 2009/148019

(57) **Abstract**

**[Assignment]** To provide a power transmission apparatus for hybrid vehicle, power transmission apparatus which can not only carry out change-speed operations smoothly without ever interrupting the transmission of rotary power while making use of the merit of using a plurality of motors combinedly, and which is but also smaller in size, lighter in weight and more inexpensive than conventional ones; and then to provide a method of change-speed operation for the same.

**[Means for Solution]** It is equipped with: a power switcher mechanism 2 for selectively transmitting a rotary power of a primary motor (e.g., engine 91; a first input shaft 3, and a second input shaft 4, the first input shaft 3 and the second input shaft 4 that are coupled to the power switcher mechanism 2 selectively, the first input shaft 3 being further connected with a secondary motor (e.g., electric motor 94), the second input shaft 4 being not connected with the secondary motor 94; a plurality of gear trains 51-55 and 5R being placed so that the first input shaft 3 or the second input shaft 4 makes the origin, and making engagements selectively, thereby not only transmitting the rotary power but also exhibiting change-speed ratios that differ one another; an output shaft 6 for outputting the rotary power that the gear trains 51- 55 and 5R transmit; and an operation controller unit 7 for not only controlling a revolving speed of the primary motor 91 and that of the secondary motor 94 but also operating to switch the power switcher mechanism 2.

## Description

### TECHNICAL FIELD

The present invention relates to a power transmission apparatus for hybrid vehicle that has a plurality of motors on board; in more detail, it relates to a power transmission apparatus for hybrid vehicle in which a plurality of motors are combined with a transmission being equipped with a plurality of input shafts, and to a method of change-speed operation for the same.

### BACKGROUND ART

Hybrid vehicles have come into practical application, hybrid vehicles which have a plurality of motors on board, and that are intended to materialize fuel-consumption improvement, high output and environmental protection by making use of advantages of the respective motors. In particular, hybrid vehicles that have an engine and an electric motor doubling as an electric generator on board have been about to spread rapidly, because they differ from electric automobiles in that they do not require to build any infrastructures such as charging facilities. In general, engines are designed so as to exhibit higher efficiency at economic speed or more, and electric motors doubling as an electric generator are constructed so that, other than they drive running, they generate electric power by making use of engine power and regenerating energy at the time of braking. And, the total efficiency is improved by means of driving hybrid vehicles with the electric motor at the time of starting and at the time of low-speed running and then switching the electric-motor driving to driving with the engine at the moment of being transferred to high-speed running after being accelerated, and thereby the fuel consumption is improved compared with that of vehicles that have an engine alone on board. Moreover, when greater torque is necessary, it is possible to obtain high output by means of driving hybrid vehicles with both the engine and electric motor temporarily. In addition thereto, it is possible to reduce the emission amount of combustion gases to contribute to protecting environments by means of the fuel-consumption improvement and making use of the regenerating energy.

Meanwhile, as one type of transmissions for vehicle, dual clutch-type automatic transmissions have been available, dual clutch-type automatic transmissions which are equipped with the following: a dual clutch possessing two clutch units; and a plurality of gear trains being constructed between two pieces of input shafts and one piece of output shaft. This transmission has such a merit that it is possible to carry out change-speed operations smoothly so as not to interrupt the transmission of rotary powers by means of carrying out switch-over operations after putting the two clutch units into a semi-joining state. In general, a friction clutch is used for the dual clutch, friction clutch in which a driving-side friction plate and a driven-side friction plate are joined together frictionally to transmit rotary forces; and is controlled automatically by means of an electronic controller and actuator.

It has been thought of constituting a power transmission apparatus for hybrid vehicle by combining a plurality of motors like those aforementioned and a dual clutch-type automatic transmission, and one of the examples is disclosed in a "Hybrid Vehicle Having Dual Clutch-type Transmission on Board" according to Patent Literature No. 1. In claim 1 according to Patent Literature No. 1, a construction is disclosed, construction in which a transmission is connected with a crankshaft of engine by way of an electric-powered electric generator and a clutch for changing speeds. The clutch for changing speeds comprises two clutches, and is made so as to be connected odd-numbered gear lines and even-numbered gear lines alternately. Moreover, in claim 2, another construction is disclosed, another construction which comprises the following: a power switching clutch for connecting and disconnecting engine output; the electric-powered electric generator being formed integrally with the clutch for changing speeds; and multiplate-type friction clutches in a quantity of two pieces.

### Related-art Technical Literature

### Patent Literature

Patent Literature No. 1: Japanese Unexamined Patent Publication (KOKAI) Gazette No. 2005-329,813

### Brief Summary of the Invention

### Assignment to be Solved by the Invention

Incidentally, large-sized vehicles, such as tracks and buses, are subject to the technique according to Patent Literature No. 1 mainly; however, the limitations on the installation of on-board power transmission have been becoming stricter in standard-sized vehicles, such as passenger cars. That is, since the electric-powered electric generator and power switching clutch are added; since two clutches for changing speeds are required to result in being large-sized; and since the transmission proper is provided with two input shafts to result in being large-sized, it has become extremely difficult to have all of these members on-board, compared with general constructions. Moreover, the addition of the members, and their growth in size have declined the efficiency of power transmission to exert adverse effects on the consumption of fuel, and have furthermore become the causes of increasing the costs of the apparatus.

The present invention is one which has been done in view of the above background; accordingly, it provides a power transmission apparatus for hybrid vehicle, power transmission apparatus which can not only carry out change-speed operations smoothly without ever interrupting the transmission of rotary power while making use of the merit of using a plurality of motors combinedly, and which is but also smaller in size, lighter in weight and more inexpensive than conventional ones; and then it provides a method of change-speed operation for the same.

### Means for Solving the Assignment

A power transmission apparatus for hybrid vehicle according to the present invention is characterized in that it is equipped with:
a power switcher mechanism for selectively transmitting a rotary power of a primary motor;
a first input shaft, and a second input shaft, the first input shaft and the second input shaft that are coupled to the power switcher mechanism selectively, the first input shaft being further connected with a secondary motor, the second input shaft being not connected with the secondary motor;
a plurality of gear trains being placed so that the first input shaft or the second input shaft makes the origin, and making engagements selectively, thereby not only transmitting the rotary power but also exhibiting change-speed ratios that differ one another;
an output shaft for outputting the rotary power that the gear trains transmit; and
an operation controller unit for not only controlling a revolving speed of the primary motor and that of the secondary motor but also operating to switch the power switcher mechanism.

It is the gist of the present invention to make the frictional synchronizing operation using a dual clutch obsolete and then to simplify the construction of the apparatus by means of the following: not only coupling between the primary motor and the first input shaft, and between the primary motor and the second input shaft, with the power switcher mechanism selectively; but also connecting the secondary motor with the first input shaft at all times; and then controlling the revolving speeds of the primary motor and secondary motor by directly controlling through the operation controller unit. Note that the "first" and "second" distinctions for the input shafts are those which are put on them, respectively, in order for identifying one of the input shafts that is connected with the secondary motor.

It is preferable that:
said primary motor can be an engine; and
said secondary motor can be an electric motor that doubles as an electric generator.

By means of adapting the primary motor into an engine, it is possible to use all of the gear trains, where the first input shaft or the second input shaft makes the origin, for engine drive. That is, in the ordinary running by means of engine drive, it is possible to select any change-speed ratios that the gear trains exhibit. Moreover, by means of adapting the secondary motor into an electric motor doubling as an electric generator, it is possible to use one of the gear trains, where the first input shaft makes the origin, for electric-motor drive. In addition, by means of inputting the engine's motive power, or regenerating energy at the time of braking, from the first input shaft into the electric motor doubling as an electric generator, it is possible to generate electric power.

It is preferable that a first-speed gear train of said gear trains can be placed so that the first input shaft being connected with said electric motor makes the origin.

In accordance with the aforementioned mode, the starting and low-speed running, which the first-speed gear train does, by electric-motor drive; accordingly, it is possible to compensate the disadvantage of engine drive where the efficiency at the time of low speed is lower; consequently, the mode becomes effective for the improvement of total efficiency.

It is even allowable to set up said power switcher mechanism so that it can comprise an operation switching member that rotates together with a primary output shaft of the primary motor, and which is disposed movably in an axial direction and is coupled to one of said first input shaft and said second input shaft when being moved in the axial direction.

In addition, it is preferable that:
said primary output shaft of said primary motor can comprise a driving-side inner spline on its outer peripheral side;
said first input shaft can comprise a driven-side first inner spline on its outer peripheral side;
said second input shaft can comprise a driven-side second inner spline on its outer peripheral side; and
said operation switching member can be a sleeve comprising a driving-side outer spline, which fits into the driving-side inner spline, on its inner peripheral side, and a driven-side outer spline, which fits into one of the driven-side first inner spline and the driven-side second inner spline selectively, thereon.

It is possible to construct the power switcher mechanism so that it is adapted into a sleeve rotating together with a primary output shaft of the primary motor, and being held movably in an axial direction by spline fitting; and that the sleeve fits into the first input shaft or the second input shaft selectively. In this mode, the operation controller unit controls the revolving speed of the primary motor in advance so that it synchronizes with respect to that of one of the input shafts into which the sleeve is to be fitted, prior to a fitting operation in which the sleeve is moved in the axial direction. The power switcher mechanism using the sleeve is simple remarkably, compared with the conventional construction being exemplified in Patent Literature No. 1, that is, one which uses a power switching clutch and a clutch for changing speeds combinedly; and accordingly it is possible to make it in smaller size, lighter in weight, and inexpensively. Note that the powder switcher mechanism is not limited to this mode; consequently it is possible to use dog clutches, which have been known publicly, for instance.

It is even permissible that:
one of said first input shaft and said second input shaft can make a rod shape;
another one of them can make a cylindrical shape; and
they can be arranged coaxially so that the one of them comes inside and the other one of them comes outside.

From the viewpoints of reducing in size and lightening in weight, it is preferable that the two input shafts can be arranged coaxially so that one of them comes inside and the other one of them comes outside; and it is even allowable that the secondary motor can be connected with either one of the input shafts that comes inside or outside. Note that it is even possible to arrange the two input shafts in parallel with each other.

A method of change-speed operation according to the present invention, whose subject is the above-described power transmission apparatus for hybrid vehicle, is characterized in that it comprises:
a gear-train engagement step of being engaged with a new second gear train when the rotary power is transmitted from one of said primary motor and said secondary motor to said output shaft via a first gear train of said gear trains;
a synchronization step of synchronizing another one of the primary motor and the secondary motor with the output shaft by way of the second gear train by means of control through said operation controller unit;
a paralleling step of transmitting the rotary power from both of the primary motor and the secondary motor to the output shaft; and
a transfer step of transferring the rotary power from the one of the primary motor and the secondary motor to the other one of them.

The method of change-speed operation according to the present invention comprises four steps, the gear-train engagement step, the synchronization step, the paralleling step and the transfer step, basically; depending on combinations of the motors, input shafts and gear trains that are employed before and after change-speed operations, the following variations are derived as being exemplified below.

It is even allowable that the method of change-speed operation according to the present invention can comprise:
a gear-train engagement step of being engaged with a new second gear train in which said second input shaft makes the origin when the power switcher mechanism is put in a detached state where being not coupled to the first input shaft or the second input shaft, and when the rotary power is transmitted from said secondary motor and up to said output shaft via said first input shaft and a first gear train of said gear trains;
a synchronization step of synchronizing said primary motor with respect to the second input shaft by means of control through said operation controller unit;
a paralleling step of coupling the power switcher mechanism to the second input shaft, thereby establishing a transmission route that comes from the primary motor and then reaches the output shaft via the second input shaft and the second gear train; and
a transfer step of transferring the rotary power from the secondary motor to the primary motor.

When shifting a driving source from the secondary motor to the primary motor, it is possible to finish the change-speed operation by the basic four steps. When the second gear train is engaged by means of the gear-train engagement step, the second input shaft is coupled to the output shaft, and then comes to be driven from the output-shaft side. Therefore, the operation of synchronizing the primary motor with respect to the second input shaft in the synchronization step comes to have the same meaning as the operation of synchronizing the primary motor with the output shaft by way of the second gear train. Moreover, when the power switcher mechanism is coupled to the second input shaft at the paralleling step, the output shaft is driven by both of the secondary motor and the primary motor, and then becomes a state of being operated in parallel temporarily. The rotary power is transferred by means of increasing an output of the primary motor from that in the state of being operated in parallel while stopping the secondary motor in the transfer step. Note that, when shifting a driving source from the primary motor to the secondary motor, too, it is possible to finish the change-speed operation by the same four steps.

It is even permissible that the method of change-speed operation according to the present invention can comprise:
a gear-train engagement step of being engaged with a new fourth gear train in which said first input shaft makes the origin when said secondary motor is put in a rest condition, and when said power switcher mechanism is coupled to said second input shaft so that the rotary power is transmitted from said primary motor and up to the output shaft via said second input shaft and a third gear train of said gear trains;
a preliminary synchronization-paralleling step of not only starting the secondary motor to synchronize it with respect to the first input shaft but also establishing a transmission route that comes from the secondary motor and then reaches the output shaft via the first input shaft and the fourth gear train;
a preliminary transfer step of transferring the rotary power from the primary motor to the secondary motor, and thereafter putting the power switcher mechanism in a detached state where being not coupled to the first input shaft or the second input shaft;
a synchronization step of synchronizing the primary motor with respect to the first input shaft by means of control through said operation controller unit;
a paralleling step of coupling the power switcher mechanism to the first input shaft, thereby establishing a transmission route that comes from the primary motor and then reaches the output shaft via the first input shaft and the fourth gear train; and
a transfer step of transferring the rotary power from the secondary motor to the primary motor again.

Moreover, it is even allowable that the method of change-speed operation according to the present invention can comprise:
a preliminary synchronization-paralleling step of not only starting said secondary motor to synchronize it with respect to said first input shaft but also establishing a transmission route that comes from the secondary motor and then reaches said output shaft via the first input shaft and a fifth gear train of said gear trans when the secondary motor is put in a rest condition, and when said power switcher mechanism is coupled to the first input shaft so that the rotary power is transmitted from said primary motor and up to the output shaft via the first input shaft and the fifth gear train;
a preliminary transfer step of putting the power switcher mechanism in a detached state where being not coupled to the first input shaft or the second input shaft after the rotary power is transferred from the primary motor to the secondary motor;
a gear-train formation step of forming a new sixth gear train in which the second input shaft makes the origin;
a synchronization step of synchronizing the primary motor with respect to the second input shaft by means of control through said operation controller unit;
a paralleling step of coupling the power switcher mechanism to the second input shaft, thereby establishing a transmission route that comes from the primary motor and then reaches the output shaft via the second input shaft and the sixth gear train; and
a transfer step of transferring the rotary power from the secondary motor to the primary motor again.

When shifting the input shafts for transmitting the rotary power from one of them to the other one of them while keeping the primary motor making a driving source as it is before and after the change-speed operation, the number of steps increases, because it turns into an operation of returning the rotary power to the primary motor after transferring the rotary power to the secondary motor once and then operating the input shafts to switch between one of them and the other of them that is to be coupled to the power switcher mechanism. Moreover, the changes arise in the contents of the respective steps, depending on either of which input shafts makes the origin in the gear trains before and after the change-speed operation.

In addition, it is possible to carry out not only the pass-over or unsequential change-speed operation that is done while passing over any intermediate change-speed stages but also the operation of being operated in parallel that is driven by both of the motors.

### Effect of the Invention

The power transmission apparatus for hybrid vehicle according to the present invention is made so that: not only the power switcher mechanism couples between the primary motor and the first input shaft, and between the primary motor and the second input shaft, selectively; but also the secondary motor is connected with the first input shaft at all times; and then the revolving speeds of the primary motor and secondary motor are controlled through the operation controller unit directly. Therefore, it is possible to materialize a simple apparatus in which it is not necessary to carry out the frictional synchronizing operation using any dual clutch, and that carries out change-speed operations smoothly without ever interrupting the transmission of rotary power.

Moreover, in the mode in which an engine makes the primary motor and an electric motor doubling as an electric generator makes the secondary motor, it is possible to use all of the gear trains for engine drive; it is possible to use one of the gear trains in which the first input shaft makes the origin for electric-motor drive; and then it is possible to generate electric power by means of inputting engine power and regenerating energy at the time of braking into the electric motor doubling as an electric generator through the first input shaft. That is, even when the construction of apparatus is simplified, it has been possible to give the apparatus the characteristic functions of dual clutch, namely, not interrupting the transmission of rotary power, while maintaining the same functions as those of conventional hybrid vehicles.

In addition, the mode, where the first-speed gear train of said gear trains is placed so that the first input shaft being connected with the electric motor makes the origin, is effective in the improvement of total efficiency, because it is possible to carry out the starting and low-speed running, which the first-speed gear train does, by electric-motor drive.

Moreover, the mode, where a sleeve that rotates together with the a primary output shaft of the primary motor and which is retained thereto movably in the axial direction by fitting with spline is used as the power switcher mechanism, is simple remarkably, compared with the conventional construction that uses a power switching clutch and a clutch for changing speeds combinedly; and consequently it can be made in smaller size, lighter in weight, and inexpensively.

### BRIEF DESCRIPTION OF THE DRAWINGS

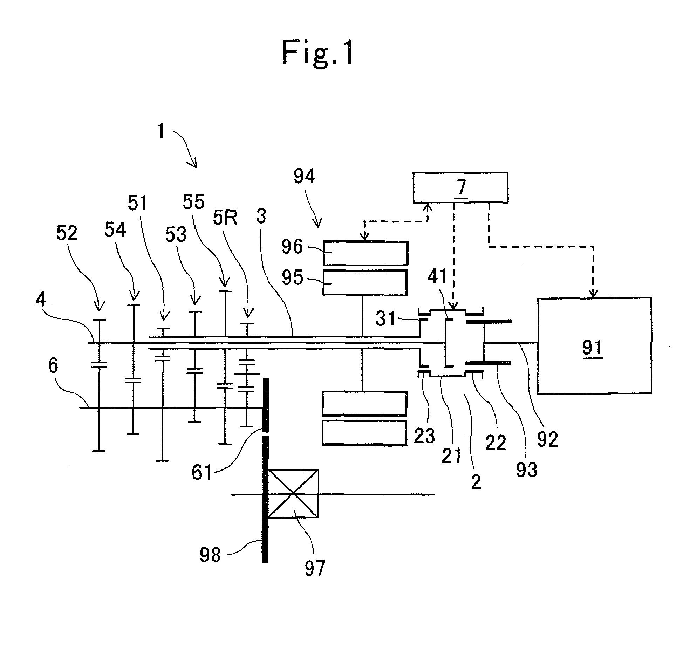

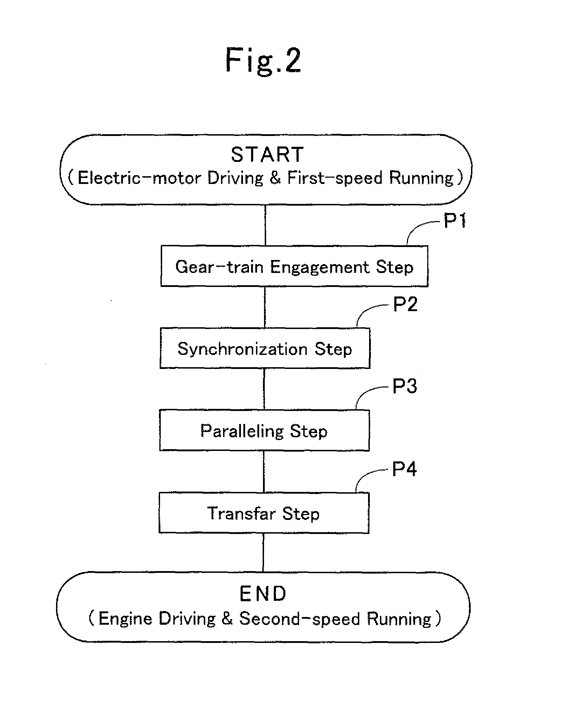

Fig. 1 is a schematic diagram, which schematically illustrates a power transmission apparatus according to an embodiment of the present invention; and Fig. 2 is a diagram, namely, a flow chart, which illustrates a method of change-speed operation in the embodiment shown in Fig. 1.

### MODES FOR CARRYING OUT THE INVENTION

One of the best modes for executing the present invention will be explained with reference to Fig. 1 and Fig. 2. Fig. 1 is a diagram for schematically illustrating a power transmission apparatus according to an embodiment of the present invention. The power transmission apparatus 1 for hybrid vehicle according to the embodiment is an apparatus in which an engine 91 makes the primary motor and an electric motor 94 makes the secondary motor, and which transmits and outputs a rotary power to a differential device 97. The power transmission apparatus 1 is constituted of a power switcher mechanism 2, a first input shaft 3 and a second input shaft 4, a plurality of gear trains 51 through 55 and 5R, an output shaft 6, and an operation controller unit 7.

The first input shaft 3 is formed as a cylindrical shape, and the second input shaft 4 is formed as a rod shape. The first input shaft 3 and second input shaft 4 are arranged coaxially so that the first input shaft 3 comes outside and then the second input shaft 4 comes inside so as to penetrate through the first input shaft 3 leftward in the drawing. As will be described later, the first input shaft 3 and second input shaft 4 are made so as to be coupled to the power switcher mechanism 2 selectively at the respective right ends in the drawing. The output shaft 6 is arranged so as to run parallel to both of the input shafts 3 and 4 down below both of the input shafts 3 and 4 in the drawing. An output gear 61 is disposed integrally at the right end of the output shaft 6 in the drawing. The output gear 61 is constituted so as to mesh with an input gear 98 of the differential device 97 and then output a rotary power. Note that the first input shaft 3, the second input shaft 4, and the output shaft 6 are supported about the axis rotatably to a not-shown casing by means of not-shown bearing units.

On the outer peripheral side of the first input shaft 3 adjacent to the right end in the drawing, a rotor 95 of the electric motor 94 is disposed so as to rotate integrally with the first input shaft 3. Meanwhile, a stator 96 is disposed on an outer-peripheral casing side that faces the rotor 95. The stator 96 is constituted so as to give and take an electric power between itself and the operation controller unit 7, and the electric motor 94 doubles as an electric generator. And, when an electric power with prescribed frequency is input into the stator 96 through the operation controller unit 7, the electric motor 94 acts as the secondary motor that rotates at a prescribed revolving speed. Conversely, when a rotary power is input into the rotor 95 through the first input shaft 3, the electric motor 94 generates an electric power and then outputs it to the operation controller unit 7. The generated electric power is made so as to be supplied to electric loads inside a vehicle after being once stored in a not-shown battery and moreover to be consumed at the time of running that the electric motor 94 drives.

The power switcher mechanism 2 is a mechanism for transmitting a rotary power of the engine 91 selectively. The power switcher mechanism 2 comprises a sleeve 21 that works as the operation switching member. When being described in detail, a driving-side inner spline 93 is disposed on an outer peripheral side of a primary output shaft 92 of the engine 91. The first input shaft 3 and second input shaft 4 are enlarged diametrically at the right ends in the drawing, respectively; and a driven-side first inner spline 31, and a driven-side second inner spline 41 are disposed on their outer peripheral sides, respectively. The driven-side first inner spline 31 of the first input shaft 3, and the driven-side second inner spline 41 of the second input shaft 4 are made to have the same specifications, namely, to have an equal diameter and an identical pitch, one another. As shown in the drawing, the driven-side first inner spline 31, and the driven-side second inner spline 41 are arranged while providing an interval between them in the axial direction. Meanwhile, the sleeve 21 is made to have a substantially cylindrical shape, and a driving-side outer spline 22 is disposed on the inner peripheral side of the sleeve 21 on the right in the drawing. A driven-side outer spline 23 is disposed on the inner peripheral side of the sleeve 21 on the left in the drawing. The driving-side outer spline 22 of the sleeve 21 is fitted into the driving-side inner spline 93 of the primary output shaft 92 at all times. The sleeve 21 is made so as to rotate together with the primary output shaft 92, and to be capable of moving in the axial direction. The driven-side outer spline 23 of the sleeve 21 fits into the driven-side first inner spline 31 of the first input shaft 3 when it moves in the axial direction to the left in the drawing. Moreover, the driven-side outer spline 23 of the sleeve 21 fits into the driven-side second inner spline 41 of the second input shaft 4 when it moves in the axial direction to the right in the drawing. Thus, the sleeve 21 is made so as to selectively transmit a rotary power of the engine 91 to each of the input shafts 3 and 4. Moreover, the driven-side outer spline 23 of the sleeve 21 is constituted so that, when it does not move to any of the right and left in the drawing, it is positioned in the middle between the two driven-side inner splines 31 and 41 to make a detached state in which no rotary power is transmitted. Fig. 1 illustrates a state where the sleeve 21 is moved in the axial direction to the left in the drawing to transmit a rotary power from the engine 91 to the first input shaft 3.

The multiple gear trains 51 through 55 and 5R are constituted so that not only they engaged to transmit rotary powers but also they exhibit change-speed ratios differing one another. Each of driving gears (not designated with reference numbers), which are arranged on the first input shaft 3 from the left in the drawing, makes a pair with each of driven gears (not designated with reference numbers), which are arranged on the output shaft 6 to face the driving gears, to mesh with each other, thereby forming each of the first-speed, third-speed and fifth-speed gear trains 51, 53 and 55. Similarly, each of driving gears, which are arranged on the second input shaft 4 from the left in the drawing, makes a pair with each of driven gears, which are arranged on the output shaft 6 to face the driving gears, to mesh with each other, thereby forming each of the second-speed and fourth-speed gear trains 52 and 54. Moreover, a reverse-travel driving gear, which is disposed on the first input shaft 3, and a reverse-travel driven gear, which is disposed on the output shaft 6, mesh with each other by way of an intermediate gear, thereby forming a gear train 5R for reverse travel. Note that each of the gear trains 51 through 55 and 5R is constituted so that they are engaged selectively by means of a not-shown synchromesh mechanism that has been known publicly.

The operation controller unit 7 is one which not only controls the revolving speeds of the engine 91 and electric motor 94 but also operates to switch the power switcher mechanism 2. The operation controller unit 7 is constituted of an electronic control device, various actuators, various sensors and electric-power supplier unit, which are not shown in the drawing. The control for the revolving speed of the engine 91 is carried out by means of detecting a number of rotations of the primary output shaft 92 and then adjusting a fuel-supply amount and/or air-supply amount. The control for the revolving speed of the electric motor 94 is carried out by means of supplying an electric power to the electric motor while adjusting the electric power to be supplied from the electric power supplier unit in terms of the frequency or voltage. Moreover, the operation for switching the power switcher mechanism 2 is carried out by means of operating the sleeve 21 with a hydraulic or electric-powered actuator. Method for these controls and operations are not limited especially; that is, it is possible to apply techniques, which have been known publicly, to them.

Next, an operation method and actions of the power transmission apparatus 1 for hybrid vehicle according to the above-described embodiment will be explained hereinafter. Firstly, an operation method of starting vehicle from the state of standstill will be explained. When a vehicle is in the state of standstill, the engine 91 and electric motor 94 are stopped, the power switcher mechanism 2 is put in a detached state, and none of the gear trains 51 through 55 and 5R are engaged. Under the circumstances, the first-speed gear train 51, where the first input shaft 3 makes the origin, is first engaged by means of the synchromesh mechanism. Subsequently, when the operation controller unit 7 supplies an electric power to the electric motor 94 from the electric-power supplier unit, the electric motor 94 starts, and then the first input shaft 3 begins to rotate. And, a rotary power is output to the differential device 97 from the output shaft 6 by way of the first-speed gear train 51. Thus, the vehicle starts and then runs at the first speed.

Successively, an operation of up-shifting change-speed from the first speed by driving with the electric motor 94 to the second speed by driving with the engine 91 will be explained with reference to Fig. 2. Fig. 2 is a diagram, namely, a flow chart, which illustrates a method of change-speed operation for the power transmission apparatus 1 for hybrid vehicle according to the embodiment of the present invention. When a change-speed request to the second speed arises during the first-speed running, the second-speed gear train 52, where the second input shaft 4 makes the origin, is first engaged by means of the synchromesh mechanism at the gear-train engagement step P1. Subsequently, the engine 91 is started by means of control through the operation controller unit 7 at the synchronization step P2, and then a revolving speed of the engine 91 is synchronized with respect to that of the second input shaft 4. That is, the engine 91 is synchronized with the output shaft 6 by way of the second input shaft 3 and second-speed gear train 52. Subsequently, when the power switcher mechanism 2 is coupled to the second input shaft 4 at the paralleling step P3, a rotary power comes to be transmitted from the engine 91 to the output shaft 6. That is, the engine 91, and the electric motor 94 are operated in parallel. Finally, while decreasing an output of the electric motor 94, an output of the engine 91 is increased at the transfer step P4. And, the rotary power is transferred by means of putting the electric motor 94 in a rest condition eventually, and thereby the change-speed operation is completed.

Successively, a change-speed operation from the second speed by driving with the engine 91 to the third speed by driving with the engine 91 will be explained. When a change-speed request to the third speed arises during the second-speed running, the third-speed gear train 53, where the first input shaft 3 makes the origin, is first engaged by means of the synchromesh mechanism at another gear-train engagement step. Subsequently, the electric motor 94 is started at a preliminary synchronization-paralleling step, and then a revolving speed of the electric motor 94 is synchronized with respect to that of the first input shaft 3. That is, from the electric motor 94 as well, a rotary power is transmitted to the output shaft 6 via the first input shaft 3 and third-speed gear train 53, and then the engine 91, and the electric motor 94 are operated in parallel. Subsequently, the rotary power is transferred from the engine 91 to the electric motor 94 at a preliminary transfer step, and thereafter the power switcher mechanism 2 is put in a detached condition. Subsequently, a revolving speed of the engine 91 is synchronized with respect to that of the first input shaft 3 at another synchronization step. Subsequently, the power switcher mechanism 2 is coupled to the first input shaft 3 at another paralleling step, then a transmission route, which comes from the engine 91 and then reaches the output shaft 6 via the first input shaft 3 and third-speed gear train 53, is established, and then the engine 91, and the electric motor 94 are operated in parallel. Finally, while decreasing an output of the electric motor 94, an output of the engine 91 is increased at another transfer step. And, the rotary power is transferred by means of putting the electric motor 94 in a rest condition eventually, and thereby the change-speed operation is completed.

Successively, a change-speed operation from the third speed by driving with the engine 91 to the fourth speed by driving with the engine 91 will be explained. When a change-speed request to the fourth speed arises during the third-speed running, the electric motor 94 is started at another preliminary synchronization-paralleling step, and then a revolving speed of the electric motor 94 is synchronized with respect to that of the first input shaft 3. That is, from the electric motor 94 as well, a rotary power is transmitted to the output shaft 6 via the first input shaft 3 and third-speed gear train 53, and then the engine 91, and the electric motor 94 are operated in parallel. Subsequently, the rotary power is transferred from the engine 91 to the electric motor 94 at another preliminary transfer step, and thereafter the power switcher mechanism 2 is put in a detached condition. Subsequently, the fourth-speed gear train 54, where the first input shaft 2 makes the origin, is engaged by means of the synchromesh mechanism at still another gear-train engagement step. Subsequently, a revolving speed of the engine 91 is synchronized with respect to that of the second input shaft 4 at still another synchronization step. Subsequently, the power switcher mechanism 2 is coupled to the second input shaft 4 at still another paralleling step, then another transmission route, which comes from the engine 91 and then reaches the output shaft 6 via the second input shaft 4 and fourth-speed gear train 54, is established, and then the engine 91, and the electric motor 94 are operated in parallel. Finally, while decreasing an output of the electric motor 94, an output of the engine 91 is increased at still another transfer step. And, the rotary power is transferred by means of putting the electric motor 94 in a rest condition eventually, and thereby the change-speed operation is completed.

Note hereinafter that it is possible to carry out still another change-speed operation of up-shifting from the fourth speed to the fifth speed as well in the same manner as the change-speed operation from the second speed to the third speed. Moreover, it is possible to carry out operations of down-shifting from higher-speed sides to likewise lower-speed sides as well as pass-over or unsequential change-speed operations.

Note that the electric-power generation action of the electric motor 94 is materialized by inputting a rotary power into the first input shaft 3 from the engine 91 directly at the time of running with the gear trains 51, 53 and 55 for odd-numbered speeds. Moreover, at the time of running with the gear trains 52 and 54 for even-numbered speeds, the electric-power generation action of the electric motor 94 is materialized by inputting a rotary power into the first input shaft 3 from the engine 91 by way of the output shaft 6. In addition, even when regenerative energy is generated by means of braking, too, a rotary power is input into the first input shaft 3 by way of the output shaft 6, and thereby the electric-power generation action of the electric motor 94 is materialized.

As explained above, in the present embodiment, the revolving speeds of the engine 91 and electric motor 94 are adjusted by means of direct control through the operation controller unit 7 so that they synchronize with each other. Therefore, in lieu of the conventional friction clutches for establishing the synchronization by means of frictional engagement as having been used heretofore, it is possible to use the power switcher mechanism 2 with a simpler construction that uses the sleeve, and thereby it has become possible to achieve the following: making the apparatus smaller in size; making it lighter in weight; and turning it into an inexpensive one.

### Explanation on Reference Numerals

- 1: Power: Transmission Apparatus for Hybrid Vehicle;
- 2:: Power Switcher Mechanism; 21: Sleeve;
- 3:: First Input Shaft;
- 4:: Second Input Shaft;
- 51-55:: Gear Trains for First Speed-Fifth Speed;
- 5R:: Gear Train for Reverse Travel;
- 6:: Output Shaft;
- 7:: Operation Controller Unit
- 91:: Engine; 94: Electric Motor; and
- 97;: Differential Device

## Claims

1. A power transmission apparatus for hybrid vehicle being **characterized in that** it is equipped with:
a power switcher mechanism for selectively transmitting a rotary power of a primary motor;
a first input shaft, and a second input shaft, the first input shaft and the second input shaft that are coupled to the power switcher mechanism selectively, the first input shaft being further connected with a secondary motor, the second input shaft being not connected with the secondary motor;
a plurality of gear trains being placed so that the first input shaft or the second input shaft makes the origin, and making engagements selectively, thereby not only transmitting the rotary power but also exhibiting change-speed ratios that differ one another;
an output shaft for outputting the rotary power that the gear trains transmit; and
an operation controller unit for not only controlling a revolving speed of the primary motor and that of the secondary motor but also operating to switch the power switcher mechanism.

2. The power transmission apparatus for hybrid vehicle as set forth in claim 1, wherein:
said primary motor is an engine; and
said secondary motor is an electric motor that doubles as an electric generator.

3. The power transmission apparatus for hybrid vehicle as set forth in claim 2, wherein a first-speed gear train of said gear trains is placed so that the first input shaft being connected with said electric motor makes the origin.

4. The power transmission apparatus for hybrid vehicle as set forth in either one of claims 1-3, wherein said power switcher mechanism comprises an operation switching member that rotates together with a primary output shaft of the primary motor, and which is disposed movably in an axial direction and is coupled to one of said first input shaft and said second input shaft when being moved in the axial direction.

5. The power transmission apparatus for hybrid vehicle as set forth in claim 4, wherein:
said primary output shaft of said primary motor comprises a driving-side inner spline on its outer peripheral side;
said first input shaft comprises a driven-side first inner spline on its outer peripheral side;
said second input shaft comprises a driven-side second inner spline on its outer peripheral side; and
said operation switching member is a sleeve comprising a driving-side outer spline, which fits into the driving-side inner spline, on its inner peripheral side, and a driven-side outer spline, which fits into one of the driven-side first inner spline and the driven-side second inner spline selectively, thereon.

6. The power transmission apparatus for hybrid vehicle as set forth in either one of claims 1-5, wherein:
one of said first input shaft and said second input shaft makes a rod shape;
another one of them makes a cylindrical shape; and
they are arranged coaxially so that the one of them comes inside and the other one of them comes outside.

7. A method of change-speed operation for power transmission apparatus for hybrid vehicle being a method of change-speed operation for the power transmission apparatus for hybrid vehicle as set forth in either of one of claims 1-6, and being **characterized in that** it comprises:
a gear-train engagement step of being engaged with a new second gear train when the rotary power is transmitted from one of said primary motor and said secondary motor to said output shaft via a first gear train of said gear trains;
a synchronization step of synchronizing another one of the primary motor and the secondary motor with the output shaft by way of the second gear train by means of control through said operation controller unit;
a paralleling step of transmitting the rotary power from both of the primary motor and the secondary motor to the output shaft; and
a transfer step of transferring the rotary power from the one of the primary motor and the secondary motor to the other one of them.

8. The method of change-speed operation for power transmission apparatus for hybrid vehicle as set forth in claim 7 comprising:
a gear-train engagement step of being engaged with a new second gear train in which said second input shaft makes the origin when the power switcher mechanism is put in a detached state where being not coupled to the first input shaft or the second input shaft, and when the rotary power is transmitted from said secondary motor and up to said output shaft via said first input shaft and a first gear train of said gear trains;
a synchronization step of synchronizing said primary motor with respect to the second input shaft by means of control through said operation controller unit;
a paralleling step of coupling the power switcher mechanism to the second input shaft, thereby establishing a transmission route that comes from the primary motor and then reaches the output shaft via the second input shaft and the second gear train; and
a transfer step of transferring the rotary power from the secondary motor to the primary motor.

9. The method of change-speed operation for power transmission apparatus for hybrid vehicle as set forth in claim 7 comprising:
a gear-train engagement step of being engaged with a new fourth gear train in which said first input shaft makes the origin when said secondary motor is put in a rest condition, and when said power switcher mechanism is coupled to said second input shaft so that the rotary power is transmitted from said primary motor and up to the output shaft via said second input shaft and a third gear train of said gear trains;
a preliminary synchronization-paralleling step of not only starting the secondary motor to synchronize it with respect to the first input shaft but also establishing a transmission route that comes from the secondary motor and then reaches the output shaft via the first input shaft and the fourth gear train;
a preliminary transferring step of transferring the rotary power from the primary motor to the secondary motor, and thereafter putting the power switcher mechanism in a detached state where being not coupled to the first input shaft or the second input shaft;
a synchronization step of synchronizing the primary motor with respect to the first input shaft by means of control through said operation controller unit;
a paralleling step of coupling the power switcher mechanism to the first input shaft, thereby establishing a transmission route that comes from the primary motor and then reaches the output shaft via the first input shaft and the fourth gear train; and
a transfer step of transferring the rotary power from the secondary motor to the primary motor again.

10. The method of change-speed operation for power transmission apparatus for hybrid vehicle as set forth in claim 7 comprising:
a preliminary synchronization-paralleling step of not only starting said secondary motor to synchronize it with respect to said first input shaft but also establishing a transmission route that comes from the secondary motor and then reaches said output shaft via the first input shaft and a fifth gear train of said gear trans when the secondary motor is put in a rest condition, and when said power switcher mechanism is coupled to the first input shaft so that the rotary power is transmitted from said primary motor and up to the output shaft via the first input shaft and the fifth gear train;
a preliminary transfer step of putting the power switcher mechanism in a detached state where being not coupled to the first input shaft or the second input shaft after the rotary power is transferred from the primary motor to the secondary motor;
a gear-train formation step of forming a new sixth gear train in which the second input shaft makes the origin;
a synchronization step of synchronizing the primary motor with respect to the second input shaft by means of control through said operation controller unit;
a paralleling step of coupling the power switcher mechanism to the second input shaft, thereby establishing a transmission route that comes from the primary motor and then reaches the output shaft via the second input shaft and the sixth gear train; and
a transfer step of transferring the rotary power from the secondary motor to the primary motor again.
